Europäisches Patentamt

European Patent Office

Office européen des brevets

(19)

(11) Publication number: **0 077 420**

**A1**

# (12) EUROPEAN PATENT APPLICATION

(21) Application number: **81304716.4**

(22) Date of filing: **09.10.81**

(51) Int. Cl.³: **G 07 C 9/00**
**G 01 G 3/14**

(43) Date of publication of application:
**27.04.83 Bulletin 83/17**

(84) Designated Contracting States:
**AT BE CH DE FR IT LI LU NL SE**

(71) Applicant: **Larby, Martin Charles**
**Virchow Strasse 18**
**D-8000 Munchen 40(DE)**

(71) Applicant: **Seedhom, Bahaa Botros**
**75 Holt Park Crescent**
**Leeds 16 West Yorkshire(GB)**

(72) Inventor: **Larby, Martin Charles**
**Virchow Strasse 18**
**D-8000 Munchen 40(DE)**

(72) Inventor: **Seedhom, Bahaa Botros**
**75 Holt Park Crescent**
**Leeds 16 West Yorkshire(GB)**

(74) Representative: **Geldard, David Guthrie et al,**
**URQUHART-DYKES AND LORD 11th Floor, Tower**
**House Merrion Way**
**Leeds, LS2 8PB West Yorkshire(GB)**

(54) Security system.

(57) A method and apparatus are disclosed for preventing the unauthorised removal of items from a secure area by providing at the entry or exit of the area at least one barrier (10) means (12) for weighing a person approaching the barrier, means (14) for recording the weight so obtained, the barrier allowing the person to pass therethrough after the weight has been recorded, and means for comparing a second weighing of the person on returning with the recorded weighing and indicating if the two weights do not agree to within preset limits. The weighing means (12) include at least two load cells (18, 20, 22) one of which is under compression (18, 20) and one of which is under tension (22). The apparatus may be used unidirectionally where it is desired to control the total weight within a designated area.

Fig. 1.

- 1 -

## SECURITY SYSTEM

This invention relates to a method and apparatus for preventing the unauthorised removal of items from a secure area.

In shops, supermarkets, libraries, and the like there is a perennial problem of losses through theft or pilfering. In order to combat this, plain clothes store detectives may be employed, or scanning systems involving video cameras may be used. However, practised shoplifters soon learn to avoid these systems, and while they may cut down some casual theft, the root of the problem still remains.

The invention seeks to provide a security system in which unauthorised removal of items, eg shoplifting, may be eliminated entirely or at least reduced to negligible proportions.

According to the present invention there is provided a method which comprises designating a secure area, equiping every entry or exit to the area with weighing means and a releasable barrier, weighing a person on entry into the area, recording the weight, weighing the person on exit from the area, comparing the exit weight with the entry weight, and means for indicating if the entry and exit weights do not agree to within preset limits, the weighing means having two or more load cells, of which at least one is under compression and at least one under tension during the weighing step.

The invention also provides an apparatus for positioning at the entry or exit to a secure area which comprises at least one barrier, means for weighing a person approaching the barrier, means for recording the weight so obtained, the barrier allowing the person to pass therethrough after the weight has been recorded, and means for comparing a second weighing of the person on returning with the recorded weighing and indicating if the two weights do not agree to within preset limits, the means for weighing including two or more load cells, of which at least one is under compression and at least one is under tension during the weighing step.

Preferably, there will be two barriers, one on either side of the weighing means. This facilitates the use of the apparatus either entering or leaving the secure area.

The means for weighing is preferably a relatively large rigid plate set into the floor of the exit or entry and mounted on the load cells. The output from the load cells, with suitable circuitry, accurately measures the weight of a person, together with personal bags, coats, etc, standing on the platform. This information may be recorded and associated with the individual, for instance on a punched or magnetically coded ticket which is issued to the person on entering the secure area. When that person leaves the secure area the ticket is presented to the apparatus and the person is reweighed. If the exit weight is not the same as the recorded entry weight to within preset limits, attention may be drawn to this fact by for example, the sounding of an alarm. The accuracy possible with apparatus of this type is considerable, and to prevent spurious alarms owing to natural weight changes eg through the loss of moisture, tolerances may be built into the system as desired. An alternative to this is to find out experimentally the average loss per unit of time in the environment of the secure area, programme this into the apparatus, and record time as well as weight on entry and exit making the necessary adjustment for the programmed average weight loss over the time concerned. The use of modern electronic computing apparatus, eg microprocessors, makes this a simple task.

We have found that the use of one load cell, or of more than one where all are under compression, does not produce a satisfactory result in that the speed and accuracy of the system, other than a very expensive system, is not adequate for commercial use. However, the unique combination of load cells according to the invention, where at least one is under compression and at least one under tension, ensures that each cell can be operated in its optimum operating range enabling fast, accurate results to be obtained. Furthermore, the spacing of the cells can be adjusted so that the load on each is roughly equal, enabling each to be operated in the same region of the operating range. A particularly preferred arrangement utilises three cells, two of which are under compression and one under tension. This has been found to give excellent results in practice.

This load cell arrangement is ideally employed together with means for digitalising the sum of the outputs from the load cells, means for sampling the digitalised output over a short period of time, and means for computing an average weight from the sample. Ideally a short delay (eg $\frac{1}{2}$ to $1\frac{1}{2}$ seconds) should elapse between the person stepping on the weighing platform and the start of the sampling operation, to allow the initial gross fluctuations to die down. The use of suitably programmed microprocessors allows an accurate average to be computed very quickly from the still-fluctuating output from the weighing platform.

According to another aspect of the invention there is provided a method of dynamic weighing which comprises digitalising the output from a weighing platform, sampling the digitalised output over a short period of time, and computing an average weight from the sample.

The invention will be described further, by way of example, with reference to the accompanying drawings, in which:

Figure 1 is a diagrammatic perspective view of an apparatus according to the invention;

Figure 2 is a diagrammatic side view of platform/load cell arrangement; and

Figure 3 is a block diagram of a suitable electronic weight reading circuit.

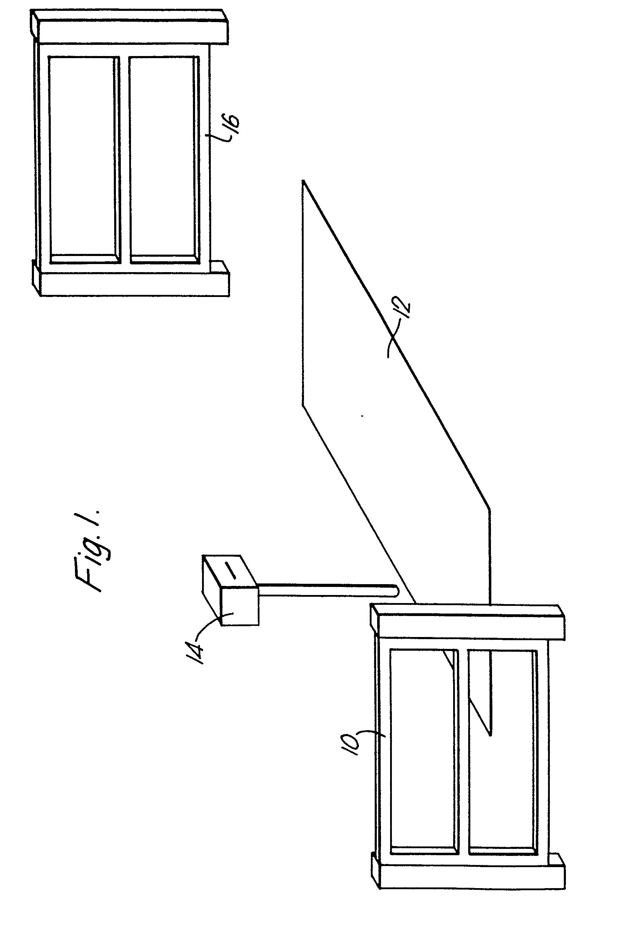

Referring to the drawings, Figure 1 depicts a typical apparatus set up, for example, at each exit or entry to a secure area, for example the furs department within a department store. The apparatus is ideally situated within a corridor, but may be used in an open area provided suitable enclosing walls are provided. On approaching the entrance to the secure area a customer first meets a barrier 10 which is unlocked. After the barrier has been opened and the customer passes through, the barrier closes and locks. The customer then stands on a weighing platform 12 together with all his personal impedimenta such as coats and bags. The platform may be made so as to entirely fill the floor space within the apparatus. After a short delay of, say, ½ second to allow large initial weight fluctuations to settle, an average weight is computed and the weight is recorded and encoded on a ticket issued by a dispenser 14. The dispenser and barriers, and optionally any side walls, may be mounted on the platform 12, so that if the customer leans on a barrier or the dispenser, his weighing is not affected. Removing the ticket from the dispenser 14 triggers the opening of an exit gate 16 allowing the customer into the secure area.

Preferably the platform is so located or shaped, e.g. by means of foot-shaped depressions, so that the customer is led to stand in one particular area, optimum for weighing as will be described more fully herein-below.

After he has done his shopping the customer hands in his goods to check point or sales assistant for packaging and leaves the secure area through the same or a different exit containing the apparatus of the invention. On leaving, the entry procedure is reversed. The customer first passes through the barrier 16 which closes and locks behind him. At this point barrier 10 is also locked. He inserts his ticket into the dispenser/ reader 14 and when his weight as recorded by the weighing platform 12 has been computed, his exit weight is compared to the entry weight recorded on the ticket within the reader 14. If the weights agree to within preset limits, eg 15gm, the gate 10 is automatically unlocked and the customer leaves collecting his purchased goods outside the secure area. If, however, his exit weight differs from the preset limit, both gates remain locked and an alarm is sounded. A store detective may then be called to ask for a satisfactory explanation of the weight difference, the absence of which would involve the law enforcement agencies being called.

The apparatus of the invention may be made large enough to accommodate, eg, mothers with prams or disabled persons in wheelchairs, without departing from the principle of operation. In order that natural weight changes should not cause spurious alarms, it is preferable that restaurants, toilet facilities, and the like should be located outside the secure area.

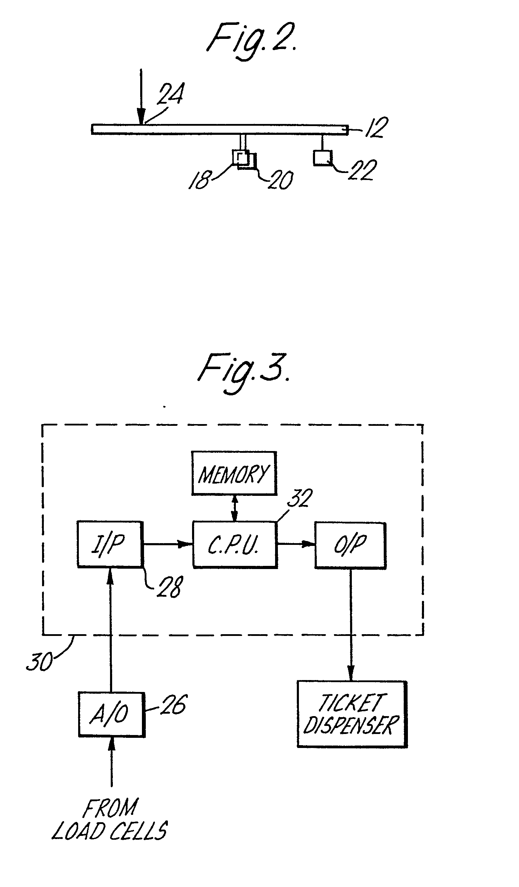

Referring now more particularly to Figure 2, a preferred load cell and platform arrangement is shown which is especially advantageous. The rigid platform 12 is mounted on three load cells 18, 20 and 22 such that two of the cells, 18 and 20, are located in line towards the centre of the platform and a third 22, is located towards one edge thereof. The area on which the customer stands is towards the opposite edge and is indicated at 24. Thus, in use, the cells 18, 20 are under compression and the cell 22 is under tension. By choosing the distances between the weighing area 24 and the groups of cells correctly, the load on each cell can be made roughly equal. Since load cells have a preferred operating range outside of which they can give non-linear outputs, the system shown ensures that each cell is always loaded within its preferred operating range. The output of the three cells is summed to obtain the weight.

Softwear may be included in the microprocessor such that even if non-linear load cells are used, an accurate calibration table of the load and the output of the cells may be stored in the memory of the processor.

The summed output of the load cells may be processed by the circuit shown in Figure 3. The analogue signal from the load cells 18, 20, 22 is converted to a digital signal in an analogue/digital converter 26, and fed to the input 28 of a microprocessor 30. A central processing unit 32 is programmed to sample the input digital signal, e.g. 80 times per second, and calculate an average. It has been unexpectedly found that a sampling of, for example, about one second produces a weight reading which is consistently reproducible without requiring the customer to stand still on the platform. Ideally sampling does not commence until, say, about half a second after the customer has stepped onto the platform with both feet to reduce weight distortions caused by the initial impulse. Thus the circuit illustrated in Figure 3 could be used for dynamic weighing applications, that is for weighing people, cattle, vehicles or the like passing over a weighing platform without requiring them to stop for more than a short time, say, about 2 seconds.

It will be appreciated that the above described arrangement and the means of operation of the equipment will vary according to the equipment. For example, a modification of the apparatus of the invention may be used at airports. In this modification the apparatus need only be unidirectional and all the passengers together with cabin luggage for an aeroplane pass through an apparatus according to the invention. The weights instead of being stored and compared, are in this totalled to give a total weight of passengers and luggage. This would then allow precise calculations as to the fuel requirements for an aircraft on a given journey, increasing the safety factor and at the same time preventing expensive underutilisation of the aircraft, which, if its passenger load is below expectations, can take on, for example, additional freight. A similar system could be used in other locations where total weight needs to be controlled, e.g. lifts.

In order to compensate for weight changes introduced by debris being brought into and deposited on the weighing platform, a tear operation can be programmed into the apparatus so that the weighing platform is zeroed before each new weighing every time a customer enters the apparatus.

Also, the area of the weighing platform should be free from ledges, shelves, hooks and the like so

0077420

- 8 -

that a customer cannot hang up his shopping bag and prevent it from being weighed. Ideally the weighing platform will fill the whole of the entire base of, or be integral with, a featureless booth so that everything, with which a customer enters is necessarily weighed with the customer.

As an added advantage, the apparatus could easily be adapted to include a counter thus giving the management of the concern employing the apparatus a source of statistical information, for example the total number of customers per week, or the like.

The weighing platform of apparatus in accordance with the present invention may be provided with a vibration damping surface to minimise the initial and subsequent fluctuations in weight as a person steps on the platform.

- 1 -

CLAIMS:-

1.  A weighing apparatus which comprises at least one barrier, means for weighing a person approaching the barrier, means for recording the weight so obtained, the barrier allowing the person to pass therethrough after the weight has been recorded, and means for comparing a second weighing of the person on returning with the recorded weighing and indicating whether the two weights agree within preset limits, the means for weighing including two or more load cells, of which at least one is under compression and at least one is under tension during the weighing step.

2.  An apparatus as claimed in claim 1 in which there are two barriers one on either side of the weighing means  so that the same weighing means may be used either entering or leaving the secure area.

3.  An apparatus as claimed in claim 2 in which the means for weighing is a large rigid plate set into the floor of the exit or entry and mounted on load cells.

4.  An apparatus as claimed in claim 3 in which the plate has a marked area or depressions indicating where the user is to stand.

6.  An apparatus as claimed in any one of claims 1 to 5 in which three load cells are arranged supporting a rigid plate such that, in use, two are under compression and one is under tension and that the load on each cell is approximately even.

7.  An apparatus as claimed in any one of claims 1 to 6 in which a machine readable ticket is issued once the weight has been recorded.

8.  An apparatus as claimed in claim 7 in which the ticket is presented on leaving the secure area to enable comparison between the entry and exit weights.

9.  An apparatus according to any one of claims 1 to 8 incorporating means for digitalising the output

- 2 -

from the weighing platform, sampling the digitalised
output over a short period of time, and computing an
average weight from the sample.

10. A method of weighing persons entering an area
in which the total weight load must be controlled which
comprises positioning an apparatus according to any one
of claims 1 to 9 at the entry to the area and summing
the successive weighings in order to obtain the total.

CLAIMS:-

2 2 FL 1983

1. A weighing apparatus which comprises a weighing platform including one or more load cells, means for digitalising the output from the load cells, sampling the digitalised output over a short period of time, and computing an average weight from the sample.

2. An apparatus as claimed in claim 1 in which at least two load·cells are used of which at least one ·is under compression and at least one is under tension.

3. An apparatus as claimed in claims 1 or 2 in which three load cells are arranged supporting the weighing platform such that, in use, two are under compression and one is under tension and that the load on each cell is approximately even.

4. An apparatus as claimed in any of claims 1 to 3 additionally comprising at least one barrier for halting a person on the weighing platform, means for recording the weight so obtained, the barrier allowing the person to pass therethrough after·the weight has been recorded, and means for comparing a second weighing of the person on returning with the recorded weighing and indicating whether the two weights agree to within preset limits.

5. An apparatus as claimed in claim 4 in which there are two barriers one on either side of the weighing means so that the same weighing means are used either on entering or on leaving a secure area.

6. An apparatus as claimed in either of claims 4 or 5 in which the means for weighing is a large rigid plate set into the floor of the exit or entry of a secure area and mounted on the load cells.

7. An apparatus as claimed in claim 6 in which the plate has a marked area or depression indicating where the user is to stand.

8. An apparatus as claimed in any one of claims 4 to 7 in which a machine-readable ticket is issued once the weight has been recorded.

9. An apparatus as claimed in claim 8 in which the ticket is presented on leaving the secure area to enable comparison between the entry and exit weights.

10. A method of weighing persons entering an area to which the total weight load must be controlled which comprises positioning an apparatus according to any one of claims 1 to 9 at the entry of the area summing successive weighings in order to obtain the total.

Fig. 1.

*Fig.2.*

*Fig.3.*

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 040 055 PROJECTS REALISATION) *Complete document* | 1-3,7-9 | G 07 C 9/00<br>G 01 G 3/14 |
| Y | GB-A-1 068 480 (AVERY) *Claims and figures* | 1,3,6 | |
| A | GB-A-2 064 794 (DERWENT MEASUREMENT & CONTROL) *Abstract; page 1, line 115 to page 2, line 36; figure 1; claims* | 9,10 | |
| A | DE-B-1 277 575 (CARL SCHENCK MASCHINENFABRIK) *Column 2, line 50 to column 4, line 27; figure 1* | 1 | |
| A | DE-A-2 407 628 (L.BEHRENS)<br><br>*Page 1, last paragraph to page 4, line 1; figures* | 1-3,7,8 | **TECHNICAL FIELDS SEARCHED (Int. Cl. ³)**<br><br>G 07 F 17/04<br>G 07 F 17/14<br>G 07 F 17/26<br>G 07 C 9/00 |
| A | DE-A-2 139 997 (E.STECHEMESSER)<br><br>*Page 2, last paragraph to page 6, 1st paragraph; figures* | 1-3,7,8 | G 07 C 9/02<br>G 07 C 11/00<br>A 47 F 10/00<br>G 01 G 3/14<br>G 01 G 21/23<br>G 01 G 3/12 |

The present search report has been drawn up for all claims

| Place of search | Date of completion of the search | Examiner |
|---|---|---|
| THE HAGUE | 30-06-1982 | DAVID J.Y.H. |